# EUROPÄISCHE PATENTSCHRIFT

(11) **EP 1 369 159 B1**
(45) Veröffentlichungstag und Bekanntmachung des Hinweises auf die Patenterteilung: **03.02.2010**
(21) Anmeldenummer: 03012101.6
(22) Anmeldetag: 28.05.2003
(51) Int. Cl.: B01D 39/20

(54) **Filterelement zur Flüssigkeitsabscheidung aus einem Gasstrom**
Filter element for separating liquid from a gas stream
Element de filtre pour la séparation de liquide d'un courant gazeux

(30) Priorität: 31.05.2002 DE 10224223
(43) Veröffentlichungstag der Anmeldung: 10.12.2003
(73) Patentinhaber: MANN+HUMMEL GmbH, 71638 Ludwigsburg (DE)
(72) Erfinder: Staudenmayer, Bernhard, 67373 Dudenhofen (DE); Brandt, Detlef, 67346 Speyer (DE); Heikamp, Wolfgang, 67165 Waldsee (DE)
(74) Vertreter: Voth, Gerhard

(56) Entgegenhaltungen:
- EP-A- 0 755 709
- US-A- 3 353 682
- US-A- 4 225 442
- US-A- 5 679 441

## Beschreibung

Die Erfindung bezieht sich auf ein Filterelement insbesondere zur Flüssigkeitsabscheidung aus einem Gasstrom, nach dem Oberbegriff des Anspruches 1.

In der Druckschrift EP 0 674 582 B1 wird ein derartiges Filterelement beschrieben, welches aus einem Filtervlies mit unter Druck aneinander gesinterten Metallfasern sowie einem Metalldrahtgeflecht als Trägerkörper des Filtervlieses besteht. Durch den Sinterprozess werden die Metallfasern, welche eine Dicke von mindestens 8 µm aufweisen, zusammengebacken, wodurch sich eine vergleichsweise geringe Porosität von maximal 40% ergibt. Diese Porosität ist ausreichend für die Reinigung von mit Partikeln verschmutzter Rohluft oder sonstigen gasförmigen Medien, da das Gas in der Lage ist, die Zwischenräume im Filtervlies unter Vermeidung eines unzulässig hohen Staudruckes zu durchströmen. Eine Reinigung flüssiger Medien ist jedoch nicht oder nur in einem eingeschränkten Maße möglich, da auf Grund der verhältnismäßig hohen Dichte des Filtervlieses ein Durchströmen nur mit Hilfe eines relativ hohen Staudruckes möglich ist, der jedoch in der Regel nicht erzeugt werden kann oder aber zu Schäden im Filtervlies führen kann.

Auch in der Druckschrift EP 0 639 398 B1 wird ein aus Metallfasern bestehendes Filtervlies beschrieben, wobei die Metallfasern einen Durchmesser von 5 bis 40 µm haben sollen. Das Filterelement wird bevorzugt zur Reinigung von Dieselabgasen eingesetzt, wobei das Metallfiltervlies die Rußpartikel aus dem Abgas abscheidet. Auch dieses Filtervlies ist auf Grund seiner verhältnismäßig hohen Dichte nur eingeschränkt für die Reinigung von verunreinigten Flüssigkeiten zu verwenden.

Die Druckschrift US 3,353,682 offenbart ein Filtermedium zur Reinigung von Gasströmen. Hierzu ist das Filtermedium aus Fasern mit einem Faserdurchmesser von kleiner 0,5µm gebildet. Die Fasern können aus verschiedensten Materialien bestehen, wie z.B. aus Glas, Asbest, Leinen, Baumwolle, Kupfer oder Aluminium. Zur Herstellung des Filtermediums sind die Fasern in einer Lösung dispergiert, welche auf einen Träger aufgebracht wird. Nach dem Trocknen der Lösung kann das Filtermedium als dünne Schicht von dem Träger abgezogen werden, oder darauf verbleiben. Das so erzeugte Filtermedium verfügt über eine Dicke von 0,0001 bis 0,055 inch.

Der Erfindung liegt das Problem zu Grunde, ein Filterelement zur Flüssigkeitsabscheidung aus einem Gasstrom anzugeben, das sich durch einen einfachen Aufbau und einen guten Wirkungsgrad bei zugleich geringem Staudruck auszeichnet.

Dieses Problem wird erfindungsgemäß mit den Merkmalen des Anspruches 1 gelöst. Die Unteransprüche geben zweckmäßige Weiterbildungen an.

Bei dem erfindungsgemäßen Filterelement bilden die Metallfasern im Filtervlies einen ungesinterten Verbund, wobei die Metallfasern einen Durchmesser im Bereich von 1,5 bis 10 µm aufweisen. Bei vorteilhaften Ausführungen weisen die Metallfasern einen Durchmesser kleiner 4 µm oder sogar kleiner 2 µm auf.

Das Filtervlies weist eine Porosität von mindestens 90% auf, vorteilhaft sogar mindestens 98% oder mindestens 99%. Diese hohe Porosität stellt sicher, dass das Filtervlies bei geringem Staudruck von dem zu reinigenden Medium durchströmt werden kann, so dass insbesondere bei einer Anwendung des Filterelements in einer Kurbelgehäuseentlüftungseinrichtung die Abscheidung von Öltropfen im Öl-Luft-Gemisch im Kurbelgehäuse ohne signifikanten Druckverlust erheblich verbessert werden kann. Auf Grund des guten Wirkungsgrades des Filtervlieses kann auf eine Nachabscheidung bzw. ein nachfolgendes Drainagevlies grundsätzlich verzichtet werden. Das Filtervlies zeichnet sich zusätzlich zum guten Abscheidegrad durch eine geringe Rußaffinität aus, außerdem sättigt sich das Filtervlies nicht mit Öl, so dass ein Verstopfen mit Öltropfen nicht zu erwarten ist.

Ein weiterer Vorteil ergibt sich durch die watteähnliche Konsistenz und geringe Dichte des Filtervlieses, wodurch die Möglichkeit geschaffen wird, das Filtervlies ohne Beeinträchtigung seiner Filtereigenschaften zu formen und an die jeweiligen konstruktiven Gegebenheiten in der Filtereinrichtung anzupassen.

Der Trägerkörper, auf den das Filtervlies aufgebracht und mit dem das Filtervlies verbunden ist, verleiht dem Filterelement die erforderliche Stabilität und ist insbesondere in der Lage, Zugkräfte, gegebenenfalls auch Druckkräfte, welche orthogonal zur Durchströmungsrichtung durch das Filter wirken, zu übertragen. Um den Druckverlust zwischen Rohseite und Reinseite so gering wie möglich zu halten und die Abscheidung am Filterelement nicht zu beeinträchtigen, weist der Trägerkörper zweckmäßig eine Dicke von höchstens 0,1 mm auf und kann zusätzlich oder alternativ eine Dichte von höchstens 10 g/mm² besitzen. Auch der Trägerkörper ist vliesähnlich ausgebildet und kann insbesondere eine Gitterstruktur aufweisen, um die Durchströmung mit dem zu reinigenden Medium so wenig wie möglich zu beeinträchtigen.

Es sind sowohl Ausführungen mit nur einer Filtervlieslage als auch Ausführungen mit mehreren Filtervlieslagen möglich. Im Falle einer mehrlagigen Ausführung kann jede Filtervlieslage Metallfasern mit gleichem Durchmesser, beispielsweise einem Durchmesser von 4 µm, aufweisen. Die Filtervlieslagen können aber auch Metallfasern mit voneinander abweichendem Durchmesser besitzen, wodurch der Abscheidegrad verbessert werden kann. Als vorteilhaft hat sich ein dreilagiger Schichtaufbau erwiesen, bei welchem die beiden äußeren Lagen Metallfasern mit einem Durchmesser von 4 µm und die zwischenliegende Lage Metallfasern mit einem kleineren Durchmesser, insbesondere mit einem Durchmesser von 2 µm aufweisen.

Innerhalb einer Filtervlieslage sind zweckmäßig nur Metallfasern mit gleichem Durchmesser vorgesehen. Es kann aber auch vorteilhaft sein, innerhalb einer Filtervlieslage Metallfasern unterschiedlichen Durchmessers einzusetzen.

Der Trägerkörper besteht aus Kunststoff. Der Trägerkörper bildet insbesondere eine Außenschicht des Filtervlieses bzw. des Verbundes aus mehreren Lagen mit Filtervliesen, zweckmäßig auf der Abströmseite. Es besteht aber auch die Möglichkeit, dass die Trägerschicht in ein Filtervlies integriert wird oder dass die Trägerschicht zwischen zwei benachbarten Filtervlieslagen angeordnet ist.

Die Verbindung zwischen dem Trägerkörper und dem Filtervlies erfolgt mittels Ultraschallschweißens.

Das Filterelement kann zylindrisch, insbesondere hohlzylindrisch, oder auch als Flachfilter in geschichteter Sandwichbauweise ausgeführt sein. Das Filterelement kann gegebenenfalls auch Wellenform oder Faltenform aufweisen.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch ein hohlzylindrisches Filterelement mit einem innen liegenden Trägerkörper und einem Verbund aus drei übereinander geschichteten Lagen Filtervliese auf der äußeren Mantelfläche des Trägerkörpers,
- Fig. 2: einen Abscheider zur Kurbelgehäuseentlüftung mit einem eingesetzten Filterelement,
- Fig. 3: einen Abscheider mit einem Wechselfilterelement.

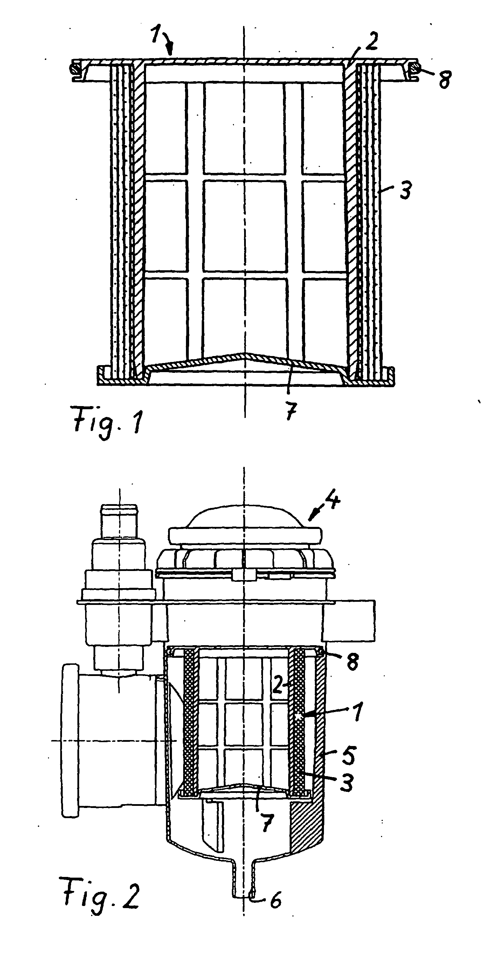

Das in Fig. 1 dargestellte Filterelement 1 besteht aus einem die Form eines Hohlzylinders aufweisenden Trägerkörper 2 und mehreren Lagen Filtervliese 3, die auf die zylindrische, äußere Mantelfläche des Trägerkörpers 2 aufgewickelt sind. Jede Filtervlieslage besteht aus Metallfasern mit einem Durchmesser von höchstens 4 µm, die einen ungesinterten Verbund bilden und dadurch eine hohe Porosität von mindestens 90%, gegebenenfalls sogar über 99% aufweisen. Innerhalb einer Filtervlieslage sind zweckmäßig Metallfasern gleichen Durchmessers angeordnet. Unterschiedliche Filtervlieslagen können Metallfasern unterschiedlichen oder auch gleichen Durchmessers aufweisen. So ist es insbesondere möglich, in verschiedenen Lagen Filtervliese mit Durchmessern von 4 µm und von 2 µm zu kombinieren, um den Abscheidegrad zu verbessern. Dargestellt sind insgesamt drei übereinander gelegte Filtervlieslagen.

Bei einer mehrlagigen Ausführung mit zumindest zwei Filtervlieslagen kann der Abscheidegrad entsprechend den verwendeten Metallfasern in jeder Lage beeinflusst werden. Eine weitere Einstellmöglichkeit ergibt sich durch die Wickelkraft, mit der jedes Filtervlies um den Trägerkörper gewickelt wird. Auf Grund der Kompressibilität des Filtervlieses beeinflusst die Wickelkraft die Dichte des Vlieses und damit auch den Abscheidegrad.

Der Trägerkörper besteht aus Kunststoff und ist mit dem unmittelbar auf ihm aufliegenden Filtervlies mittels Ultraschallschweißens verbunden. Das Filterelement 1 wird vorteilhaft radial von außen nach innen von dem zu reinigenden Medium, insbesondere von einem Öl-Luft-Gemisch durchströmt, wobei die Ölpartikel abgeschieden werden und die Luft in den Zylinderinnenraum einströmt und aus diesem axial abgeführt wird.

Es kann gegebenenfalls auch zweckmäßig sein, das Filterelement in Gegenrichtung von innen radial nach außen durchströmen zu lassen, so dass sich die Rohseite im Zylinderinnenraum und die Reinseite radial auf der Außenseite des Filterelements befinden.

Fig. 2 zeigt einen Abscheider 4, welcher insbesondere zur Kurbelgehäuseentlüftung eingesetzt wird. In einem Gehäuse 5 des Abscheiders 4 ist ein Filterelement 1 mit dem Trägerkörper 2 und mindestens einem Filtervlies 3 eingesetzt. Das Filterelement 1 wird radial von außen nach innen durchströmt, wobei die radial außen liegende Rohseite mit einer Austragsöffnung 6 im Boden des Gehäuses 5 des Abscheiders 4 kommuniziert, über die das abgeschiedene Öl aus dem Abscheider abgeleitet werden kann. Die gereinigte Luft wird über die innen liegende Reinseite axial nach oben abgeleitet, wobei am Boden des Filterelementes 1 eine mit dem Trägerkörper 2 verbundene Bodenplatte 7 die Reinseite von der darunter liegenden Rohseite separiert. Über einen Dichtring 8, welcher in einer Aufnahmenut in einem Deckelabschnitt des Trägerkörpers 2 aufgenommen ist, wird der Filterelementinnenraum nach oben hin gegenüber der Rohseite strömungsdicht abgedichtet.

Die Metallfasern können als Metalllegierungen ausgeführt sein und in einer ersten Ausführung folgende Zusammensetzung aufweisen: maximal 0.03% C, durchschnittlich 2% Mn, durchschnittlich 0.045% P, durchschnittlich 0.03% S, durchschnittlich 1% Si, durchschnittlich 16% bis maximal 18% Cr, durchschnittlich 10% bis maximal 14% Ni und durchschnittlich 2% bis maximal 3% Mo. Die Filterrate beträgt für Flüssigkeiten 2 µm und für Gase 0.1 µm bei einer Maximaltemperatur von 350° bis 380° C.

In einer weiteren Ausführung lautet die Zusammensetzung: maximal 0.1% C, 21% bis 25% Cr, 58% bis 63% Ni und maximal 1.4% A1. Die Filterrate beträgt für Flüssigkeiten 20 µm und für Gase 7 µm bei einer Maximaltemperatur von 560° C.

In noch einer weiteren Ausführung lautet die Zusammensetzung: maximal 0.3% Co, 22% bis 24% Cr, 15% bis 16.5% Mo, maximal 1.5% Fe, maximal 0.01% C, maximal 0.1% Si, maximal 0.5% Mn, 0.1% bis 0.4% Al, maximal 0.015% P, maximal 0.005% S. Diese Zusammensetzung zeichnet sich durch eine gute Korrosionsbeständigkeit gegen Schwefelsäure aus. Die Filterrate beträgt für Flüssigkeiten 15 µm und für Gase 5 µm bei einer Maximaltemperatur von 600° C.

In noch einer weiteren Ausführung lautet die Zusammensetzung: 19.5% bis 20.5% Cr, maximal 0.03% C, maximal 0.35% Si, maximal 0.35% Mn, 4.55% bis 4.95% Al, maximal 0.035% P, maximal 0.01% S, maximal 0.35% Ni, maximal 0.15% Cu, 0.25% bis 0.3% Y. Diese Zusammensetzung zeichnet sich durch eine gut Korrosionsbeständigkeit gegen Schwefel und Schwefelkomponenten aus. Die Filterrate beträgt für Flüssigkeiten 35 µm und für Gase 10 µm bei einer Maximaltemperatur von 1000° C.

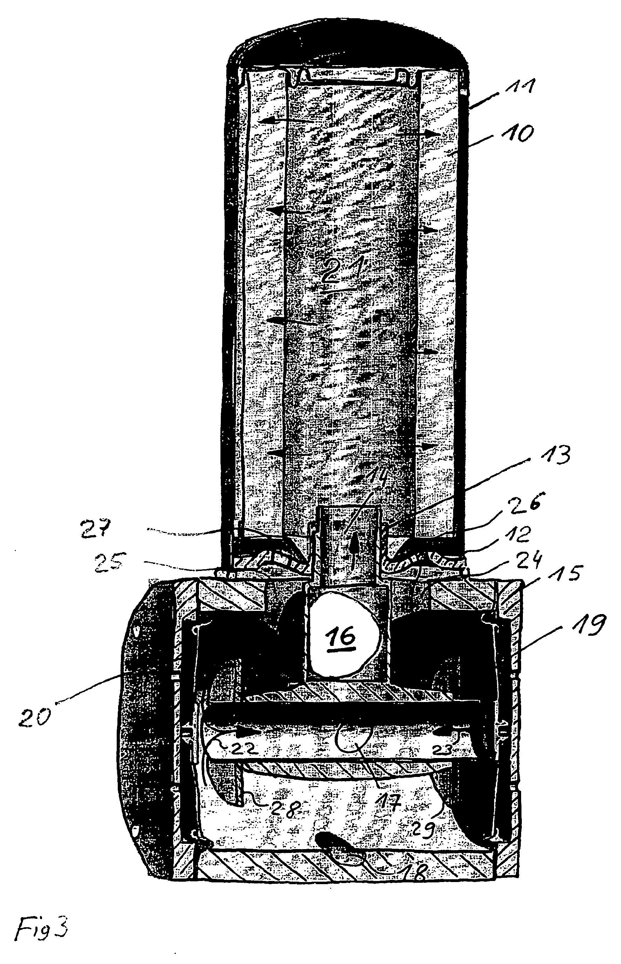

Fig. 3 zeigt ein Abscheideelement in einer Kartusche, die in Form eines Wechselelements aufgebaut ist. Das Ölabscheideelement 10 ist in einem topfförmigen Gehäuse 11 angeordnet. Dieses topfförmige Gehäuse 11 ist an seiner Unterseite mit einem Deckel 12 verschlossen. Das Gehäuse 11 ist über einen Bördelrand mit dem Deckel 12 verbunden. Dieser Deckel 12 weist eine Gewindebuchse 13 auf. Mit dieser Gewindebuchse 13 wird das gesamte Abscheideelement an einem Gewindestutzen 14 angeschraubt. Der Gewindestutzen 14 ist Teil eines Modulträgers 15. Dieser Modulträger 15 weist drei Anschlüsse auf: eine Einströmöffnung 16, eine Abströmöffnung 17 sowie eine Ablauföffnung 18. Außerdem sind in dem Modulträger 15 zwei Unterdruckventile 19, 20 angeordnet.

Durch die Eintrittsöffnung 16 strömt ölhaltige Luft in die Eintrittskammer 21.

Von der Eintrittskammer 21 strömt die Luft gemäß den Pfeilen durch das Ölabscheideelement 10, welches das Filtervlies gemäß Figur 2 enthält. Die entölte Luft tritt durch die Öffnungen 26, 27 aus dem Gehäuse 11 des Wechselelements aus. Das Gehäuse 11 ist dichtend mit dem Modulträger 15 verbunden, daher strömt die entölte Luft, welche durch die Öffnungen 26, 27 aus dem Gehäuse ausgetreten ist, durch die Öffnungen 24, 25 in den Modulträger 15 ein. Gemäß den Pfeilen 22, 23 wird die entölte Luft zu der Abströmöffnung 17 geleitet.

Das in dem Ölabscheideelement 10 sich ansammelnde Öl gelangt, wie auch die entölte Luft über die Öffnungen 26, 27 bzw. 24, 25 in den Modulträger 15. Hier sammelt sich das Öl am Boden und strömt über die Ablauföffnung 18 ab. Damit das Öl, welches durch die Öffnungen 24, 25 in den Modulträger 15 gelangt nicht durch den entölten Luftstrom zu der Abströmöffnung 17 mitgerissen wird, sind Scheiben 28, 29 vorgesehen. Die Scheiben 28, 29 stauen das Öl auf und lassen es in Richtung Ablauföffnung 18 ablaufen. Zum Austausch des Ölabscheideelements 10 ist es lediglich erforderlich, dieses von dem Gewindestutzen 14 zu lösen. Dies hat den Vorteil, dass Anschlüsse oder sonstige Ventile nicht gelöst oder ausgetauscht werden müssen. Außerdem wird kein zusätzlicher Bauraum beim Ausbau in Anspruch genommen.

### Bezugszeichenliste

- 1: Filterelement
- 2: Trägerkörper
- 3: Filtervlies
- 4: Abscheider
- 5: Gehäuse
- 6: Austragöffnung
- 7: Bodenplatte
- 8: Dichtring
- 9:
- 10: Ölabscheideelement
- 11: Gehäuse
- 12: Deckel
- 13: Gewindebuchse
- 14: Gehäusestutzen
- 15: Modulträger
- 16: Einströmöffnung
- 17: Abströmöffnung
- 18: Ablauföffnung
- 19, 20: Unterdruckventil
- 21: Eintrittskammer
- 22, 23: Pfeil
- 24, 25: Öffnung
- 26, 27: Öffnung

## Patentansprüche

1. Filterelement zur Flüssigkeitsabscheidung aus einem Gasstrom, mit einem aus Metallfasern bestehenden Filtervlies (3), das mit einem Trägerkörper (2) verbunden ist, wobei
die Metallfasern im Filtervlies (3) einen ungesinterten Verbund mit einer Porosität im Filtervlies (3) von mindestens 90% bilden und dass die Metallfasern einen Durchmesser von mindestens 1,5 µm und höchstens 4 µm aufweisen,
**dadurch gekennzeichnet,**
**dass** der Trägerkörper (2) eine Dicke von höchstens 0,1mm aufweist und vliesähnlich ausbebildet ist, wobei der Trägerkörper (2) aus Kunststoff besteht und das Filtervlies (3), welches watteähnlich ausgebildet ist, mittels Ultraschallschweißen mit dem Trägerkörper (2) verbunden ist.

2. Filterelement nach Anspruch 1,
**dadurch gekennzeichnet,**
**dass** die Porosität im Filtervlies (3) von mindestens 98% beträgt.

3. Filterelement nach Anspruch 1 oder 2,
**dadurch gekennzeichnet,**
**dass** die Metallfasern einen Durchmesser von höchstens 2 µm aufweisen.

4. Filterelement nach einem der Ansprüche 1 bis 3,
**dadurch gekennzeichnet,**
**dass** mindestens zwei Lagen Filtervliese (3) übereinander gelegt sind.

5. Filterelement nach Anspruch 4,
**dadurch gekennzeichnet,**
**dass** übereinander liegende Filtervlieslagen Metallfasern unterschiedlichen Durchmessers aufweisen.

6. Filterelement nach Anspruch 5,
**dadurch gekennzeichnet,**
**dass** insgesamt drei Filtervlieslagen vorgesehen sind, wobei die äußeren Lagen Metallfasern mit einem Durchmesser von höchstens 4 µm und die mittlere Lage Metallfasern mit einem Durchmesser von höchstens 2 µm aufweisen.

7. Filterelement nach Anspruch 4,
**dadurch gekennzeichnet,**
**dass** übereinander liegende Filtervlieslagen Metallfasern gleichen Durchmessers aufweisen.

8. Filterelement nach einem der Ansprüche 1 bis 7,
**dadurch gekennzeichnet,**
**dass** der Trägerkörper (2) eine Dichte von höchstens 10 g/m² aufweist.

9. Filterelement nach einem der Ansprüche 1 bis 8,
**dadurch gekennzeichnet,**
**dass** der Trägerkörper (2) eine Gitterstruktur aufweist.

10. Filterelement nach einem der Ansprüche 1 bis 9,
**dadurch gekennzeichnet,**
**dass** das Filterelement als austauschbares Wechselfilterelement (10) ausgeführt ist.

## Claims

1. Filter element for the separation of liquids from a gas flow, with a filter fleece (3) made of metal fiber which is connected with a supporting body (2), the metal fibers in the filter fleece (3) forming an unsintered composite with a porosity in the filter fleece (3) of at least 90% and that the metal fibers feature a diameter of at least 1.5 µm and of not more than 4 µm,
**characterized in**
**that** the supporting body (2) features a thickness of not more than 0.1 mm and has a fleece-like design, the supporting body (2) consisting of plastic and the filter fleece (3) which has a cotton-like design being connected with the supporting body (2) by means of ultrasonic welding.

2. Filter element according to claim 1,
**characterized in**
**that** the porosity in the filter fleece (3) amounts to at least 98%.

3. Filter element according to claim 1 or 2,
**characterized in**
**that** the metal fibers feature a maximum diameter of 2 µm.

4. Filter element according to one of the claims 1 to 3,
**characterized in**
**that** at least two layers of filter fleece (3) are placed on top of each other.

5. Filter element according to claim 4,
**characterized in**
**that** filter fleece layers put on top of each other feature metal fibers of different diameters.

6. Filter element according to claim 5,
**characterized in**
**that** altogether three filter fleece layers are provided, the exterior metal fiber layers featuring a diameter of not more than 4 µm and the central metal fiber layers a diameter of not more than 2 µm.

7. Filter element according to claim 4,
**characterized in**
**that** filter fleece layers put on top of each other feature metal fibers of the same diameter.

8. Filter element according to one of the claims 1 to 7,
**characterized in**
**that** the supporting body (2) features a density of maximum 10 g/m².

9. Filter element according to one of the claims 1 to 8,
**characterized in**
**that** the supporting body (2) features a lattice structure.

10. Filter element according to one of the claims 1 to 9,
**characterized in**
**that** the filter element is designed as replaceable spin-on filter element (10).

## Revendications

1. Elément filtrant pour la séparation d'un liquide à partir d'un flux gazeux, avec un voile filtrant (3) constitué de fibres métalliques et relié à un corps support (2), les fibres métalliques formant dans le voile filtrant (3) un ensemble non fritté d'une porosité dans le voile filtrant (3) d'au moins 90 % et les fibres métalliques présentant un diamètre d'au moins 1,5 µm et d'au plus 4 µm,
**caractérisé en ce**
**que** le corps support (2) présente une épaisseur d'au plus 0,1 mm et est réalisé de manière similaire à un voile, le corps support (2) étant constitué de matière plastique et le voile filtrant (3), lequel est réalisé de manière similaire à de la ouate, est relié au corps support (2) par soudage par ultrasons.

2. Elément filtrant selon la revendication 1,
**caractérisé en ce**
**que** la porosité dans le voile filtrant (3) est d'au moins 98 %.

3. Elément filtrant selon la revendication 1 ou 2, **caractérisé en ce**
**que** les fibres métalliques présentent un diamètre d'au plus 2 µm.

4. Elément filtrant selon l'une des revendications 1 à 3, **caractérisé en ce**
**qu'**au moins deux couches de voiles filtrants sont superposées.

5. Elément filtrant selon la revendication 4,
**caractérisé en ce**
**que** des couches de voiles filtrants superposées présentent des fibres métalliques de différents diamètres.

6. Elément filtrant selon la revendication 5, **caractérisé en ce que** trois couches de voiles filtrants au total sont prévues, les couches extérieures présentant des fibres métalliques avec un diamètre d'au plus 4 µm et la couche centrale présentant des fibres métalliques avec un diamètre d'au plus 2 µm.

7. Elément filtrant selon la revendication 4, **caractérisé en ce que** des couches de voiles filtrants superposées présentent des fibres métalliques du même diamètre.

8. Elément filtrant selon l'une des revendications 1 à 7,
**caractérisé en ce**
**que** le corps support (2) présente une densité d'au plus 10 g/m².

9. Élément filtrant selon l'une des revendications 1 à 8, **caractérisé en ce que** le corps support (2) présente une structure en forme de grille.

10. Elément filtrant selon l'une des revendications 1 à 9, **caractérisé en ce que** l'élément filtrant est réalisé en tant qu'élément filtrant échangeable (10).
